# EUROPÄISCHE PATENTSCHRIFT

(11) **EP 0 958 143 B1**
(45) Veröffentlichungstag und Bekanntmachung des Hinweises auf die Patenterteilung: **22.09.2004**
(21) Anmeldenummer: 97946955.8
(22) Anmeldetag: 02.12.1997
(51) Int. Cl.: B41J 2/32, G06K 17/00

(54) **VORRICHTUNG ZUM THERMISCHEN EINBRINGEN VON INFORMATIONEN UND INFORMATIONSTRÄGER**
DEVICE FOR THERMAL APPLICATION OF INFORMATION AND INFORMATION CARRIER
DISPOSITIF POUR L'APPLICATION THERMIQUE D'INFORMATIONS ET SUPPORT D'INFORMATION

(30) Priorität: 02.12.1996 AT 208596
(43) Veröffentlichungstag der Anmeldung: 24.11.1999
(73) Patentinhaber: CLEARJET GmbH, 8071 Grambach (AT)
(72) Erfinder: Ulrich,Ewald, 8200 Gleisdorf (AT)
(74) Vertreter: Secklehner, Günter, Dr.
(86) Internationale Anmeldenummer: PCT/AT1997/000261
(87) Internationale Veröffentlichungsnummer: WO 1998/024632

(56) Entgegenhaltungen:
- EP-A- 0 344 789
- EP-A- 0 431 155
- EP-A- 0 473 403
- EP-A- 0 557 013
- EP-A- 0 729 848
- WO-A-96/31839
- DE-A- 19 705 009
- FR-A- 2 717 938
- FR-A- 2 743 440
- US-A- 5 371 522
- US-A- 5 430 467
- US-A- 5 453 765
- PATENT ABSTRACTS OF JAPAN vol. 016, no. 085 (P-1319), 28. Februar 1992 & JP 03 269693 A (OMRON CORP), 2. Dezember 1991
- PATENT ABSTRACTS OF JAPAN vol. 096, no. 010, 31. Oktober 1996 & JP 08 147432 A (NHK SPRING CO LTD), 7. Juni 1996
- PATENT ABSTRACTS OF JAPAN vol. 095, no. 010, 30. November 1995 & JP 07 179060 A (RICOH CO LTD), 18. Juli 1995
- PATENT ABSTRACTS OF JAPAN vol. 017, no. 524 (M-1483), 21. September 1993 & JP 05 139028 A (RICOH CO LTD), 8. Juni 1993
- PATENT ABSTRACTS OF JAPAN vol. 018, no. 013 (M-1539), 11. Januar 1994 & JP 05 254282 A (GLORY LTD), 5. Oktober 1993
- PATENT ABSTRACTS OF JAPAN vol. 016, no. 529 (M-1332), 29. Oktober 1992 & JP 04 197656 A (TOSHIBA CORP), 17. Juli 1992
- PATENT ABSTRACTS OF JAPAN vol. 014, no. 217 (M-0970), 8. Mai 1990 & JP 02 050897 A (RICOH CO LTD), 20. Februar 1990
- PATENT ABSTRACTS OF JAPAN vol. 096, no. 002, 29. Februar 1996 & JP 07 276814 A (OKI ELECTRIC IND CO LTD), 24. Oktober 1995
- PATENT ABSTRACTS OF JAPAN vol. 096, no. 006, 28. Juni 1996 & JP 08 039838 A (TOSHIBA CORP), 13. Februar 1996
- PATENT ABSTRACTS OF JAPAN vol. 012, no. 151 (P-699), 11. Mai 1988 & JP 62 267788 A (FUJI XEROX CO LTD), 20. November 1987
- PATENT ABSTRACTS OF JAPAN vol. 013, no. 066 (P-828), 15. Februar 1989 & JP 63 254478 A (MINOLTA CAMERA CO LTD), 21. Oktober 1988
- PATENT ABSTRACTS OF JAPAN vol. 097, no. 003, 31. März 1997 & JP 08 287211 A (TOSHIBA CORP), 1. November 1996
- PATENT ABSTRACTS OF JAPAN vol. 016, no. 569 (M-1343), 9. Dezember 1992 & JP 04 219271 A (RICOH CO LTD), 10. August 1992

## Beschreibung

Die Erfindung betrifft eine Vorrichtung zum thermischen Einbringen von Informationen, z.B. Zeichen, Graphik etc., in eine thermosensitive Schichte eines mit einem elektronischen Datenspeicherelement in Form eines Prozessor-Chip versehenen Informationsträgers, z.B. Identifikations-, Wert-, Berechtigungs- oder Warenauszeichnungskarte etc., mit einer durch Führungen gebildeten Ein- und Ausgabevorrichtung für den Informationsträger und mit einer Lösch- und einer Druckvorrichtung, welcher zur Energiebeaufschlagung eine Energiekontrollschaltung vorgeordnet ist, wobei die Löschvorrichtung durch eine beheizbare Rolle gebildet ist.

Aus der WO 91/00595 A bzw. EP 0 431 155 B1 ist eine Vorrichtung zum Aufbringen von Informationen auf einen optischen Informationsträger, der aus einer Kunststoffkarte mit auf dieser angeordneten thermosensitiven Folie bekannt, die eine als beheizbare Rollen ausgebildete Löschvorrichtung, eine Vorwärmvorrichtung, eine Schreibvorrichtung und eine Kühlvorrichtung aufweist. Zur Änderung einer Klartextinformation auf der reversibel beschreibbaren thermosensitiven Schichte des Aufzeichnungsträgers wird dieser über eine Transportvorrichtung in aufeinander folgender Reihenfolge diesen Funktionsbereichen zugeführt und damit bestehende Informationen in neu vorgegebene Informationen verändert. Da diese Veränderungen in aufeinander folgenden Schritten erfolgt, und um eine größtmögliche Sicherheit zu erreichen, sind kurze Taktzeiten und damit ein entsprechender hoher Durchsatz bei der Veränderung der Klartextinformationen an derartigen Aufzeichnungsträgem nur schwer realisierbar und eignet sich ein derartiger Aufzeichnungsträger darüber hinaus nur bedingt für die automatisierte Übernahme der auf den Karten vorgesehenen Informationen.

In der EP 0 473 403 A2 ist ein Aufzeichnungsgerät zur Aufzeichnung von Informationen auf eine thermosensitive Schichte eines Aufzeichnungsträgers, insbesondere einer Magnetkarte, beschrieben. Der Magnetstreifen des Aufzeichnungsträgers ist dabei von einem magnetischen Lese- und Schreibkopf, welcher mit einer Lese- bzw. Schreibsteuervorrichtung leitungsverbunden ist, bearbeitbar. Die Lese- bzw. Schreibsteuervorrichtung ist zudem mit einer zentralen Steuervorrichtung verbunden, welche die über die Lese- bzw. Schreibsteuervorrichtung übergebenen Daten des Magnetstreifens verarbeitet. Nach der Datenverarbeitung durch die zentrale Steuervorrichtung werden die aktuellen Daten an die Lese- bzw. Schreibsteuervorrichtung weitergeleitet und dem magnetischen Lese- bzw. Schreibkopf zugeführt, wobei der Magnetstreifen neu beschrieben wird. Diese Daten sind zudem auf die thermosensitive Schichte des Aufzeichnungsträgers aufbringbar. Hierzu weist das Aufzeichnungsgerät einen thermischen Löschkopf sowie einen thermischen Druckkopf zur thermischen Behandlung der thermosensitiven Schichte auf. Der Löschkopf ist dabei mit einer elektrischen Niedertemperatursteuerung und die Druckvorrichtung ist mit einer elektrischen Hochtemperatursteuerung verbunden. Die Niedertemperatursteuerung und die Hochtemperatursteuerung werden von einer Druck- und Löschsteuervorrichtung angesteuert welche wiederum von der zentralen Steuervorrichtung kontrolliert wird und von dieser die entsprechenden Druckdaten erhält. Beiläufig ist auch erwähnt, dass die Verarbeitung von Aufzeichnungskarten mit integrierten Schaltkreisen möglich sei.

In der englischsprachigen Zusammenfassung der JP 04 197 656 A ist ein weiteres Aufzeichnungsgerät zum Aufbringen von in einer magnetischen Aufzeichnungsschichte einer Magnetkarte gespeicherten Informationen auf eine durch Wärmeeinwirkung farbveränderliche Schichte eines Aufzeichnungsmediums beschrieben. Zum Löschen von aufgebrachten Informationen wird eine mittels einer eigenständigen Wärmequelle aufheizbare Löschrolle mit dem zu löschenden Anzeigebereich in Kontakt gebracht und dadurch die farblich veränderbare Schichte in den transparenten Zustand überführt.

Aus der englischsprachigen Zusammenfassung zur JP 02 050 897 A ist eine weitere Vorrichtung zum Aufbringen von Informationen auf eine Magnetkarte mit einer wiederbeschreibbaren, thermosensitiven Aufzeichnungsschichte bekannt. Die bekannte Aufzeichnungsschichte kann dabei wiederum durch Wärmeeinwirkung von einem opaken in einen transparenten Zustand und umgekehrt überführt werden und können somit zuvor aufgezeichnete Informationen gelöscht werden. Durch Aufheizung bestimmter Teilbereiche der Aufzeichnungsschichte auf ein definiertes Temperaturniveau können nachfolgend aktuelle Informationen auf der thermosensitiven Schichte aufgezeichnet werden. Die Heizvorrichtung zum Löschen der thermosensitiven Schichte umfasst dabei eine Heizrolle, welche durch eine eigenständige, von der Heizrolle entfernte Wärmequelle mit Wärme beaufschlagt wird und dadurch indirekt aufgeheizt wird.

Aus der JP 08 039 838 A ist ein weiterer Aufzeichnungsapparat zum Aufbringen von Informationen auf eine thermosensitive Schichte eines Aufzeichnungsmediums bekannt. Zuvor aufgezeichnete Informationen auf dem Aufzeichnungsträger können dabei mittels einer als Heizrolle ausgebildeten Löschvorrichtung gelöscht werden, indem die gesamte Oberfläche des Aufzeichnungsmediums aufgeheizt wird. Der Heizrolle ist dabei ein Temperatursensor zur Erfassung aktueller Temperaturwerte zugeordnet.

In der JP 62 267 788 A ist eine Fixiervorrichtung für auf Papier aufgebrachten Toner eines Kopiergerätes beschrieben. Dabei wird das Kopierpapier zwischen einer Heizrolle und einer hohlen Heizwalze hindurchgeführt. Die Heizrolle weist für einen schlupffreien Vortrieb des naturgemäß flexiblen Kopierpapiers eine reibungssteigernde elastische Schichte aus einem elastischen Material wie Silikon, Gummi oder dgl. auf. Das zu behandelnde Objekt bzw. Papierstück wird bei der gezeigten Fixiervorrichtung zusätzlich unter Einnahme eines bestimmten Umschlingungswinkel um die Heizrolle geführt und dabei stark umgeformt.

Aufgabe der Erfindung ist es nunmehr, eine Vorrichtung zu schaffen, mit der veränderbare Informationen in Abhängigkeit von veränderbaren Informationen in einem auf dem Inforrnationsträger angeordneten Datenspeicherelement dem Benutzer eines derartigen Informationsträgers im Klartext zur Verfügung gestellt werden.

Diese Aufgabe der Erfindung wird dadurch gelöst, dass die Rolle der Löschvorrichtung eine flexible Oberfläche aufweist und die Verarbeitung und Übergabe der zu druckenden Informationen des elektronischen Datenspeicherelementes an die Druckvorrichtung über einen Prozessor erfolgt. Der überraschende Vorteil dabei ist, dass dadurch in einer platzsparenden Kombination die Chip-Manipulation bei gleichzeitiger Umsetzung in eine lesbare Information vereinigt wird und eine geringe Taktzeit und damit ein hoher Durchsatz für derartige Manipulationen erreicht wird. Von besonderem Vorteil ist auch, dass durch die Verwendung einer Löschrolle die Oberfläche der thermosensitiven Schichte geschont wird, sodass die Lebensdauer des Informationsträgers erhöht wird. Ein weiterer Vorteil liegt darin, dass Unebenheiten des Informationsträgers aufgrund der elastischen Oberfläche ausgeglichen werden können, sodass eine vollständige Löschung der gesamten thermosensitiven Schichte erreicht wird.

Vorteilhaft ist auch eine Ausbildung nach Anspruch 2, da durch die zueinander benachbarte Anordnung der Löschvorrichtung und der Druckvorrichtung für die thermosensitive Schichte ein rascher Lösch- und Schreibvorgang erreicht wird, wobei aufgrund des kurzen Weges zwischen der Löschvorrichtung und der Druckvorrichtung ein vollständiges Abkühlen der thermosensitiven Schichte verhindert wird.

Vorteilhafte Weiterbildungen sind auch in den Ansprüchen 3 bis 11 beschrieben.

Zum besseren Verständnis der Erfindung wird diese anhand der in den Figuren dargestellten Ausführungsbeispiele näher erläutert.

Es zeigen:
- Fig. 1: eine Vorrichtung in vereinfachter, schematischer Darstellung;
- Fig. 2: einen Teilbereich der Vorrichtung mit einem Informationsträger;
- Fig. 3: die Vorrichtung mit dem Informationsträger, geschnitten gemäß den Linien III - III in Fig. 2;
- Fig. 4: ein Blockschaltbild der Leistungskontrollschaltung der Vorrichtung;
- Fig. 5: ein anderes Ausführungsbeispiel der Vorrichtung in vereinfachter schematischer Darstellung;
- Fig. 6: ein weiteres Ausführungsbeispiel der Vorrichtung in vereinfachter schematischer Darstellung;

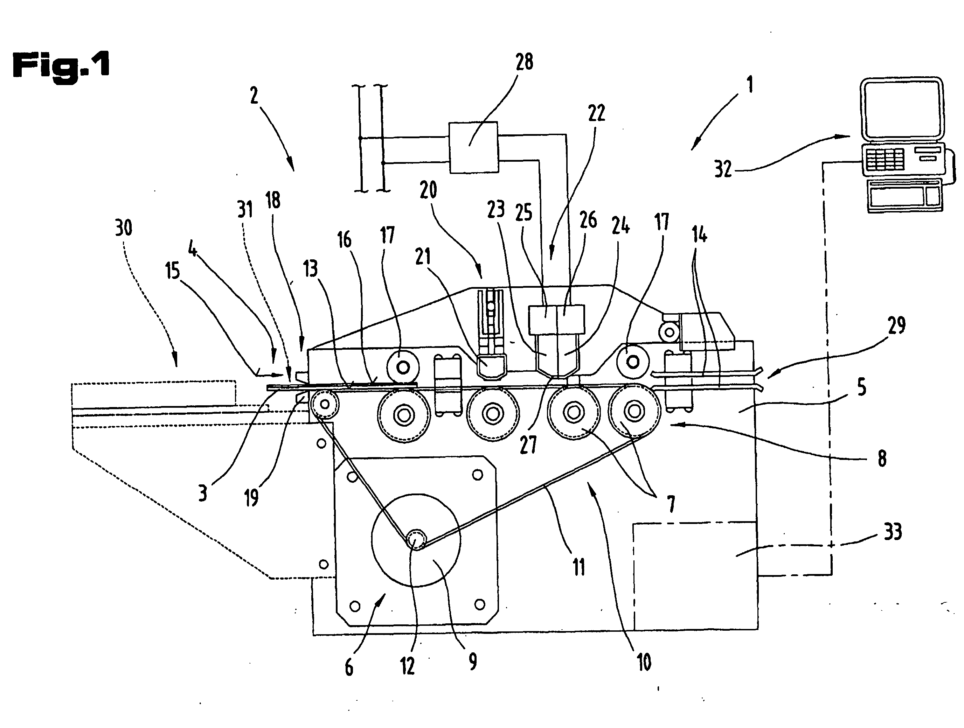

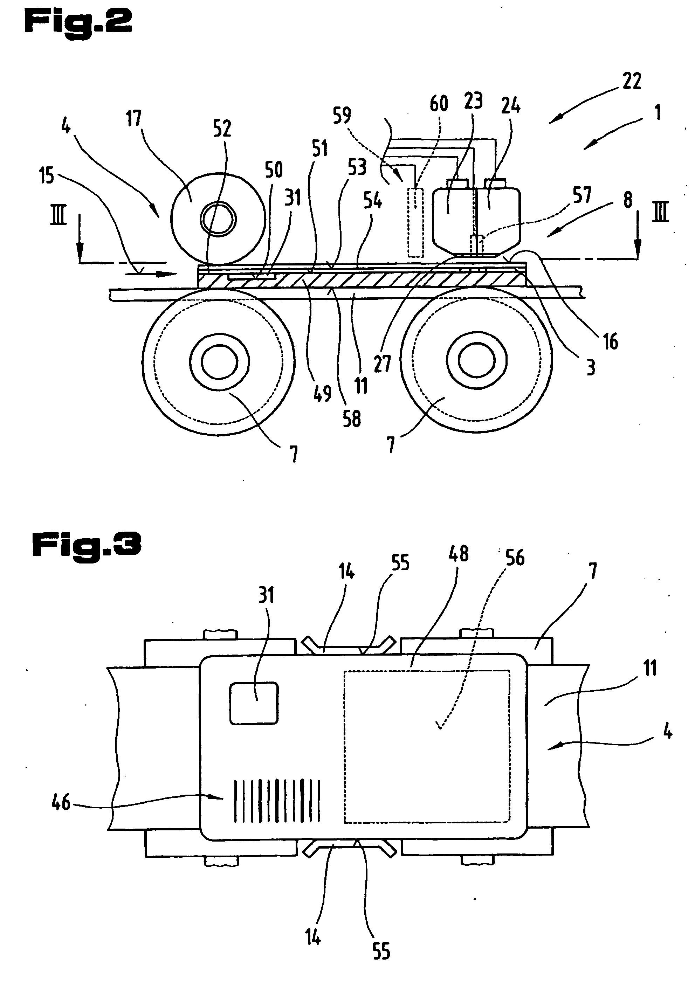

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilsbezeichnungen übertragen werden können. Auch sind die in der Beschreibung gewählten Lageangaben wie z.B. oben, unten, seitlich usw. auf die unmittelbar beschriebenen sowie dargestellten Figuren bezogen und sind bei einer Lageänderung sinngemäß auf die neue Lage zu übertragen. Die in den Fig. 1 bis 4 dargestellten Ausführungen sind dabei keine Ausführungsbeispiele der Erfindung, sondern sollen diese das Verständnis der Erfindung erleichtern.

In der Fig. 1 ist eine als Druckgerät 1 ausgebildete Vorrichtung 2 zum thermischen Einbringen von Informationen, z.B. Zeichen, Grafiken, in eine thermosensitive Schichte 3 eines in Kartenform ausgebildeten Informationsträgers 4 in vereinfachter Form gezeigt. In einem Gehäuse 5 ist eine durch über einen Antriebsmotor 6 angetriebene Transportrollen 7 gebildete Fördervorrichtung 8 für den Informationsträger 4 angeordnet. Der Antriebsmotor 6 wird bevorzugt durch einen Schrittmotor 9 gebildet, um den Vorschub des Informationsträgers 4 durch die Vorrichtung 2 hindurch durchzuführen und an genau vorgegebenen Positionen zur Durchführung von Bearbeitungsvorgängen positionsgenau unterbrechen zu können. Bevorzugt werden die Transportrollen 7 gemeinsam mittels endlosem Antriebselement 10, z.B. einem Zahnriemen 11, der über ein Antriebsrad 12 des Schrittmotors 9 geführt ist, gemeinsam angetrieben. Gleichzeitig bildet eine Oberfläche 13 des Antriebselementes 10 eine Auflagefläche für den Informationsträger 4. Selbstverständlich sind zur exakten Führung des Informationsträgers 4 noch zusätzlich, insbesondere seitlich wirkende, Kartenführungen 14 bedarfsweise vorgesehen. Wird der Informationsträger 4 in Förderrichtung - gemäß Pfeil 15 - in das Druckgerät 1 eingeführt, wird dieser von der Fördervorrichtung 8 übernommen und zwischen den Transportrollen 7 bzw. dem Antriebselement 10, eventuell unterstützt durch auf einer Oberseite 16 des Informationsträgers 4 anwirkenden, gegebenenfalls mit angetriebenen Gegenrollen 17, in die Vorrichtung 2 eingezogen.

In Förderrichtung - gemäß Pfeil 15 - folgt auf eine Eingabevorrichtung 18, z.B. Einführkulissen 19, als eine mögliche erste Bearbeitungsstation für den Informationsträger 4 eine Reinigungsvorrichtung 20. In dieser wird die Oberseite 16 des Informationsträgers 4 von anhaftendem Schmutz, Staub mittels eines auf der Oberseite 16 anwirkenden Reinigungskopfes 21 gereinigt, um Störungen in der Weiterbehandlung des Informationsträgers 4 zu vermeiden. Eine derartige Reinigung kann auf trockenem Wege aber auch durch das Aufbringen eines Filmes einer Reinigungsflüssigkeit erfolgen. Bevorzugt weist der Reinigungskopf 21 der Oberseite 16 des Informationsträgers 4 zugewandt eine filzförmige Auflage auf, die beim Hindurchfördem des Informationsträgers 4 auf dessen Oberseite aufliegt und damit Schmutzpartikel abstreift.

In Förderrichtung - gemäß Pfeil 15 - folgt auf die Reinigungsvorrichtung 20 als weitere Bearbeitungsstation eine Lösch- und/oder Druckvorrichtung 22 zum Aufbringen bzw. Verändern durch Löschen und Neubeschreiben von Klartextinformationen in Form von Zeichen oder Grafiken, die in die thermosensitive Schichte 3 des Informationsträgers 4 durch thermische Beaufschlagung dieser Schichte 3 eingebracht werden.

Derartige Schichten 3 bzw. Folien sind aus dem Stand der Technik bekannt, wobei für den gegenständlichen Fall eine sogenannte bistabile thermosensitive Schichte 3 bzw. Folie Verwendung findet. Diese Folie zeichnet sich dadurch aus, dass sie bei entsprechender thermischer Behandlung nach vorgegebenen Temperaturkriterien zwischen einem opaken und einem transparenten Zustand reversibel veränderbar ist. Eine derartige Folie ist aus dem europäischen Patent EP 0 431 155 B1 aber auch aus der Druckschrift "Thermo-reversible imagine media" der Firma Ricoh-Elektronics Inc. bekannt.

Die Vorrichtung 2 weist nunmehr eine Anordnung auf, bei der die Lösch- und/oder Druckvorrichtung 22 modulartig aufgebaut ist und unmittelbar benachbart zueinander ein Löschkopf 23 und ein Druckkopf 24 als modulartige Einheit angeordnet sind. Der Löschkopf 23 und der Druckkopf 24 sind dabei aus einer größeren Anzahl zueinander thermisch isolierter und einzeln über ein Steuermodul 25 für das Löschen und ein Steuermodul 26 für das Drucken mit Energie beaufschlagbarer Thermoelemente 27 gebildet.

Der Lösch- und/oder Druckvorgang erfolgt bei dieser Ausbildung der Vorrichtung 2, z.B. in einem Zeilen-Schrittverfahren, bei dem der Informationsträger 4 mittels der Fördervorrichtung 8 zur Vornahme des Lösch- und/oder Druckvorganges zeilenweise in Bezug auf die Lösch- und/oder Druckvorrichtung 22 positioniert wird.

Zur Beaufschlagung der Thermoelemente 27 mit Energie zur Erzielung der entsprechenden für den Lösch- bzw. Druckvorgang erforderlichen Temperatur erfolgt über eine Leistungskontrollschaltung 28, mit der einerseits die Verarbeitungstaktzeiten minimiert und andererseits die empfindlichen Thermoelemente 27 vor Beschädigungen in Folge von Systemfehlern vermieden werden. Eine derartige Leistungskontrollschaltung 28 kann, z.B. in Form einer Monoflop-Schaltung, ausgebildet sein.

Im Anschluss an das Verändern bzw. Neueinbringen von Klartextinformationen in die Schichte 3 wird der Informationsträger 4 mittels der Fördervorrichtung 8 einer Ausgabevorrichtung 29 zugeführt und kann damit vom Benutzer der Vorrichtung 2 entnommen werden.

Wie weiters gezeigt, kann der Vorrichtung 2 in Förderrichtung - gemäß Pfeil 15 - eine Chip-Bearbeitungsstation 30 in aus dem Stand der Technik bekannter Ausführung vorgeordnet werden. Damit ist die Bearbeitung von Informationsträgern 4, die mit einem elektronischen Datenspeicherelement 31, z.B. Prozessor-Chip, Laser-CD, etc., versehen sind, möglich.

Bevorzugt wird die Vorrichtung 2 von einem Rechner 32, z.B. einem PC, angesteuert, mittels dem die entsprechenden Vorgänge sowohl für die automatische Identifikation des Informationsträgers 4, z.B. durch Erfassen von Daten aus dem Datenspeicherelement 31 und dem Verändem bzw. Einbringen neuer Informationen im Klartext bzw. in grafischer Form, durchgeführt und überwacht werden. Dieser Rechner 32 steht, z.B. mit einer in der Vorrichtung 2 angeordneten Steuervorrichtung 33, in Leitungsverbindung und wird über diesen Rechner 32 der erforderliche Datenaustausch mit der Vorrichtung 2 durchgeführt. Für bestimmte Anwendungszwecke ist es aber auch möglich, die Vorrichtung 2 unmittelbar mit einem Bedienpult auszustatten, um unmittelbar vor Ort entsprechende, die Bearbeitungsvorgänge steuernde, Informationen eingeben zu können.

In den Fig. 2 und 3 ist der Informationsträger 4 beispielsweise als Wertkarte 48 für den bargeldlosen Zahlungsverkehr im Bereich des Löschkopfes 23 und des Druckkopfes 24 des Druckgeräts 1 gezeigt. Die Wertkarte 48 weist auf einem Substrat 49, z.B. einem Trägermaterial aus Kunststoff, in einer Vertiefung 50 das Datenspeicherelement 31, z.B. einen Prozessor-Chip, auf. Auf einer Oberfläche 51 des Substrats 49 ist die Schichte 3, gebildet aus einer thermosensitiven Folie 52, aufgebracht und mit dem Substrat 49 bewegungsfest verbunden. Auf einer vom Substrat 49 abgewandten Oberseite 53 der Folie 52 ist eine Schutzschichte 54 angeordnet. Diese Schutzschichte 54 besteht aus einem Transparentmaterial, z.B. aus einer kratzfesten und hoch verschleißfesten Kunststoffschichte.

Im Druckgerät 1 wird die Wertkarte 48 mittels der Fördervorrichtung 8, z.B. auf dem über Transportrollen 7 verlaufenden Zahnriemen 11 aufliegend, transportiert. Längsseitenkanten 55 der Wertkarte 48 sind die Kartenführungen 14 für die seitliche Positionierung zugeordnet. Transportrollen 7 gegenüberliegend und auf der Oberseite 16 der Wertkarte wirkend sind bevorzugt Gegenrollen 17 vorgesehen.

Wie dargestellt, kann der Informationsträger 4 zusätzlich zum Datenspeicherelement 31 mit dem Barcode 46, z.B. für eine automatische Identifikation der Wertkarte 48, in einem Erfassungsgerät versehen sein, welches extern arbeitet und keine Lesevorrichtung für das elektronische Datenspeicherelement 31 aufweist.

Die Wertkarte 48 wird in Förderrichtung - gemäß Pfeil 15 - durch das Druckgerät 1 hindurchgefördert, bis ein für das Einbringen der Klartextinformation vorgesehenes Kennzeichnungsfeld 56 in den Arbeitsbereich des Löschkopfes 23 gelangt. Die Thermoelemente 27 werden zum Löschen bestehender Zeichen aktiviert und die thermosensitive Folie 52 auf eine Temperatur gebracht, bei der diese in einen der beiden möglichen Zustände, opak bzw. transparent, überführt wird. Beim Weitertransport der Wertkarte 48 in den Bereich des unmittelbar an den Löschkopf 23 in Förderrichtung - gemäß Pfeil 15 - nachgeordneten Druckkopfes 24 erfolgt nunmehr die Darstellung des Klartextes durch Aktivierung der Thermoelemente 27 durch entsprechende Temperaturbeaufschlagung der Folie 52 bei einer Temperatur, bei der die Folie 52 in den zweiten Zustand, transparent bzw. opak, überführt wird. Zur Temperaturüberwachung weist der Löschkopf 23 bzw. Druckkopf 24 im Bereich der Thermoelemente 27 zumindest einen Temperatursensor 57 auf, wobei es auch möglich ist, durch Überwachung des inneren Widerstandes der Thermoelemente 27 deren Arbeitstemperatur zu regeln und zu kontrollieren.

Das Datenspeicherelement 31 kann als sogenannter Induktiv-Chip für eine kontaktlose Bearbeitung ausgebildet sein. Möglich ist auch die Anwendung eines laserbearbeitbaren Speicherelementes. Selbstverständlich ist es auch möglich, den Informationsträger 4 an einer Rückseite 58 mit einer weiteren thermosensitiven Folie zu versehen und auch diese mit einer Schutzschichte gegenüber mechanischer Einwirkungen zu schützen. Bei einer derartigen Ausgestaltung besteht die Möglichkeit, zusätzlich auf der Rückseite 58 des Informationsträgers 4 großflächige Klartextinformationen, Grafiken etc. vorzusehen.

Wie weiters in strichlierten Linien angedeutet, besteht auch die Möglichkeit, der Löschund/oder Druckvorrichtung 22 in Förderrichtung - gemäß Pfeil 15 - eine Vorwärmvorrichtung 59, wie in strichlierten Linien angedeutet, vorzuordnen, mittels der der Informationsträger 4 vorgewärmt wird, um für das anschließende Löschen bzw. Bedrucken eine entsprechende Ausgangstemperatur zu erreichen, wodurch sehr kurze Taktzeiten für die anschließende Bearbeitung zu erzielen sind. Die Vorwärmvorrichtung 59 kann dabei aus einem auf die Oberseite 16 thermisch einwirkenden ortsfesten Heizelement 60 gebildet sein. Möglich ist auch, das Heizelement 60 als beheizbare, auf dem Informationsträger 4 aufliegende Rolle auszubilden.

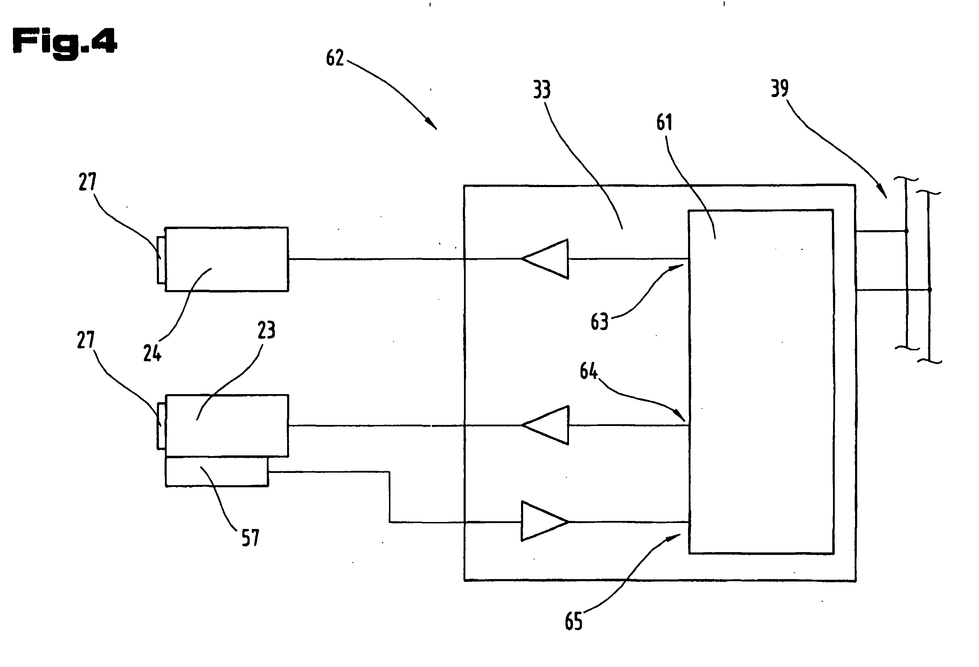

In der Fig. 4 ist in einem Blockschaltbild eine mit einem Prozessor 61 versehene Leistungskontrollschaltung 62 zur Ansteuerung des Löschkopfes 23 und des Druckkopfes 24 gezeigt. Im Prozessor 61 ist das Steuerprogramm in Form eines Regelalgorithmus hinterlegt, demgemäss die Leistungsansteuerung des Löschkopfes 23 und/oder Druckkopfes 24 nach vorgegebenen Parametern, wie z.B. vorgangsbezogene, erforderliche Temperatur, Ist-Temperatur, erforderliche sowie bereits verstrichene Aufheizzeit, thermoelementbezogene Daten, erfolgt. Über Ausgänge 63, 64 ist die Steuervorrichtung 33, die den Prozessor 61 aufweist und die über die Energieversorgung 39 mit elektrischer Energie versorgt wird, mit dem Löschkopf 23 und dem Druckkopf 24 leitungsverbunden. Bei der gezeigten Ausführung ist der Temperatursensor 57 mit einem Eingang 65 der Steuervorrichtung 33 leitungsverbunden. Die Energiebeaufschlagung der Thermoelemente 27 erfolgt in Form von Stromimpulsen, wobei die Impulsbreite zur Beaufschlagung des Druckkopfes 24 und/oder des Löschkopfes 23 in Abhängigkeit ist von Eingangsdaten, z.B. des Temperatursensors 57, der Hysterese des Thermoelementes 27, welche sich aus der Temperatur des Aufheizvorganges ergibt, und gegebenenfalls aus der bereits verstrichenen Aufheizzeit vom Prozessor 61 gemäß dem Regelalgorithmus geregelt wird.

Der Regelalgorithmus wertet die Eingangsparameter aus und führt unter Berücksichtigung der Systemparameter z.B. Abmessungen der Thermoelemente 27 und mögliche Energieabgabe der Thermoelemente 27 eine Nachführung der Impulsbreite für die Beaufschlagung der Thermoelemente 27 des Druckkopfes 24 und/oder Löschkopfes 23 durch.

Damit wird eine sehr exakte und rasche Heranführung an die erforderliche Temperatur der Thermoelemente 27 und eine Regelung in den erforderlichen engen Temperaturgrenzen erreicht.

Zur Absicherung der Funktionselemente, z.B. der Thermoelemente 27, weist der Regelalgorithmus zusätzliche Kontrollfunktionen auf.

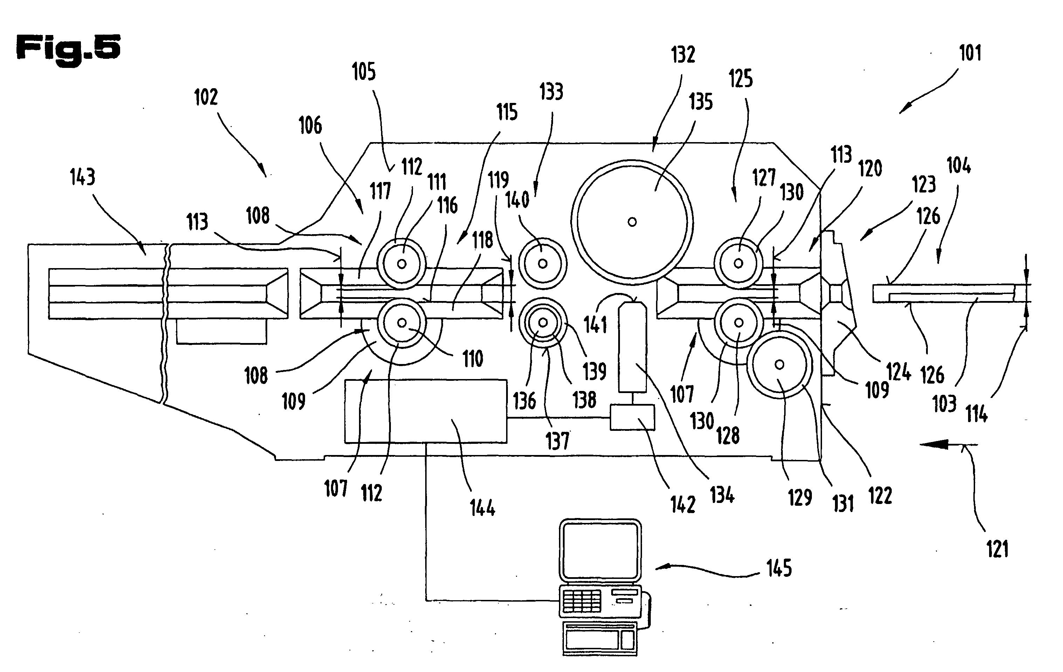

In der Fig. 5 ist eine als Druckgerät 101 ausgebildete Vorrichtung 102 zum thermischen Einbringen von Informationen, z.B. Zeichen, Graphiken usw., in eine thermosensitive Schichte 103 eines kartenförmig ausgebildeten Informationsträgers 104 in vereinfachter Form gezeigt.

In einem Gehäuse 105 ist beispielsweise eine Fördervorrichtung 106, die durch einen Antriebsmotor 107 und mehrere Transportrollen 108 gebildet ist, angeordnet. Der Antriebsmotor 107 wird bevorzugt durch einen Schrittmotor 109 gebildet, sodass eine exakte Steuerung der Vorschubbewegung des Informationsträgers 104 durch die Vorrichtung 102 hindurch durchgeführt werden kann. Durch die Verwendung eines Schrittmotors 109 ist es möglich, dass an genau vorgegebenen Positionen des Druckgerätes 101 zur Durchführung von Bearbeitungsvorgängen an den Informationsträgern 104 positionsgenau die Vorschubbewegung unterbrochen werden kann. Bevorzugt wird eine der beiden Transportrollen 108 direkt mit dem Schrittmotor 109 gekoppelt, sodass bei der Vorschubbewegung des Informationsträgers 104 eine spielfreie Positionierung des Informationsträgers 104 erreicht wird. Würde nämlich, wie aus dem Stand der Technik bekannt, der Schrittmotor 109 beispielsweise über Riemen mit einer der beiden Transportrollen 108 gekoppelt sein, so ist es möglich, dass durch Verschleiß des Riemens die Fördervorrichtung 6, insbesondere die Vorschubbewegung des Informationsträgers 104 teilweise unterbrochen werden kann, wodurch eine ungenaue Positionierung des Informationsträgers 4 erfolgt. Damit mit einem derartigen System eine exakte und ein-wandfreie Funktion der Fördervorrichtung 106 gewährleistet ist, müsste zusätzlich für einen Riemenbetrieb Spannvorrichtungen im Inneren des Druckgerätes 101 angeordnet sein, sodass dadurch die Baugröße des Druckgerätes 101 wesentlich vergrößert wird.

Bei der gezeigten Ausführungsform ist die Fördervorrichtung 106 derartig ausgebildet, dass die beiden gegenüberliegenden Transportrollen 108 durch eine Antriebsrolle 110 und eine Druckrolle 111 gebildet sind. Dabei weisen sowohl die Antriebsrolle 110 und die Druckrolle 111 an ihrer Außenfläche eine elastische, insbesondere aus Gummi, gebildete Schichte 112 auf. Die Antriebsrolle 110 und die Druckrolle 111 der Fördervorrichtung 106 werden in einen derartigen Abstand voneinander angeordnet, dass sich zwischen den beiden Transportrollen 108 eine Distanz 113 bildet. Diese Distanz 113 ist geringfügig kleiner als eine Dicke 114 des Informationsträgers 104, wodurch erreicht wird, dass sich die elastische Schichte 112 bei der Aufnahme des Informationsträgers 104 in die Fördervorrichtung 106 verformt, sodass dadurch ein entsprechender Druck auf die Flächen des Informationsträgers 104 ausgeübt wird, sodass ein Rutschen der Transportrollen 108 auf der Oberfläche des Informationsträgers 104 verhindert wird. Durch das Akivieren des Schrittmotors 109 und den auf den Informationsträger 104 ausgeübten Druck wird nun eine Vorschubbewegung entsprechend der Ansteuerung des Schrittmotors 109 erreicht. Selbstverständlich ist es möglich, dass die Druckrolle 111 über eine Lagervorrichtung beweglich am Gehäuse 105 gelagert sein kann, sodass sich entsprechend der Dicke 114 des Informationsträgers 104 die Druckrolle 111 von der Antriebsrolle 110 entfernt, wobei die Lagervorrichtung derartig ausgebildet ist, dass bei einer Vergrößerung der Distanz 113 zwischen den beiden Transportrollen 108 der Druck in entgegengesetzter Richtung zur Bewegung der Druckrolle 111 vergrößert wird, sodass wiederum auf den Flächen des Informationsträgers 104 ein entsprechender Druck ausgeübt wird, um ein Rutschen der Transportrollen 108 zu verhindern.

Im Bereich der Fördervorrichtung 106 ist eine Führungsvorrichtung 115 für den Informationsträger 104 angeordnet, wodurch eine Auflagefläche 116 für den Informationsträger 104 gebildet wird. Die Führungsvorrichtung 115 weist dabei zwei parallel zueinander verlaufende Flächen 117, 118 auf, die über eine Distanz 119 voneinander entfernt angeordnet sind. Die Distanz 119 ist geringfügig größer als die Dicke 114 des Informationsträgers 104. Hierzu ist es wieder möglich, dass die beiden Flächen 117, 118 beweglich zueinander angeordnet sind, sodass bei unterschiedlichen Dicken 114 des Informationsträgers 104 sich die Führungsvorrichtung 115 an die entsprechenden Dicken 114 der einzelnen Informationsträger 104 anpassen können. Durch die Führungsvorrichtung 115 wird erreicht, dass beim Einführen des Informationsträgers 104 in das Gehäuse 105 des Druckgerätes 101 ein Verkanten des Informationsträgers 104 zwischen den einzelnen Teilen verhindert wird, da durch die beiden parallel zueinander angeordneten Flächen 117, 118 der Informationsträger 104 exakt im Mittel der Fördervorrichtung 106 geführt wird. Selbstverständlich können zur exakteren Führung des Informationsträgers 104 im Druckgerät 101 noch zusätzliche, insbesondere seitlich wirkende, Führungsvorrichtungen 120 vorgesehen sein. Wird der Informationsträger 104 in Förderrichtung - gemäß Pfeil 121 - in das Druckgerät 101 eingeführt, so wird dieser von der Fördervorrichtung 106 übernommen und zwischen den beiden Transportrollen 108 bzw. von der Antriebsrolle 110 und der Druckrolle 111 in die Vorrichtung 102 eingezogen.

In Förderrichtung - gemäß Pfeil 121 - folgt auf eine dem Druckgerät 101 auf seiner Außenfläche 122 angeordnete Einsteckvorrichtung 123 z.B. eine Einführkulisse 124 als eine mögliche erste Bearbeitungsstation für den Informationsträger 104 eine Reinigungsvorrichtung 125, wobei von dieser zumindest eine Oberseite 126 des Informationsträgers 104, insbesondere der Schicht 103, von anhaftendem Schmutz bzw. Staub gereinigt werden kann. Hierzu ist die Reinigungsvorrichtung 125 durch zwei gegenüberliegende Rollen 127, 128 und einer Reinigungsrolle 129 gebildet. Die beiden Rollen 127, 128 können wiederum wie die Fördervorrichtung 106 ausgebildet sein, d.h., dass eine der beiden Rollen 127, 128 mit einem Antriebsmotor 107, insbesondere durch einen Schrittmotor 109, gekoppelt ist, sodass schon beim Einstecken des Informationsträgers 104, entsprechend dem Pfeil 121, eine Vorschubbewegung durchgeführt werden kann. Hierzu ist wiederum auf der Oberfläche der Rollen 127, 128 eine elastische Schichte 130 angeordnet. Die Rollen 127, 128 werden so angeordnet, dass sich zwischen den beiden Rollen 127, 128 die Distanz 113 ausbildet, wodurch beim Einstecken des Informationsträgers 104 ein entsprechender Druck auf die Oberseiten 126 des Informationsträgers 104 erzeugt wird. Die Reinigungsrolle 129 steht in direktem Kontakt zu einer der beiden Rollen 127, 128, insbesondere zur Rolle 128, wobei die Reinigungsrolle 129 eine weichere und klebrigere Schichte 131 als die Schichte 130 der beiden Rollen 127, 128 aufweist, sodass aufgrund des direkten Kontaktes der Schmutz von der Rolle 128 auf die Reinigungsrollen 129 übertragen wird. Selbstverständlich ist es möglich, dass für die weitere Rolle 127 ebenfalls eine Reinigungsrolle 129 angeordnet sein kann.

Bei Verwendung von nur einer Reinigungsrolle 129 ist es von Vorteil, dass die Reinigungsrolle 129 mit jener Rolle 127, 128, insbesondere mit der Rolle 128, angeordnet ist, die in Kontakt mit der Schichte 103 des Informationsträgers 104 steht. Weiters ist es möglich, dass anstelle einer Reinigung über eine trockene Schichte 131 auch ein Aufbringen eines flüssigen Filmes, insbesondere einer Reinigungsflüssigkeit, auf eine der beiden Rollen 127, 128 durchgeführt werden kann.

In Förderrichtung - gemäß Pfeil 121 - folgt auf die Reinigungsvorrichtung 125 als weitere Bearbeitungsstation des Informationsträgers 104 eine Druckvorrichtung 132 zum Aufbringen von Klartextinformationen in Form von Zeichen oder Graphiken, die in die thermosensitive Schichte 103 des Informationsträgers 104 durch thermisches Beaufschlagen dieser Schichte 103 eingebracht werden.

Derartige Schichten 103 bzw. Folien sind aus dem Stand der Technik bekannt, wobei für den gegenständlichen Fall eine sogenannte bistabile thermosensitive Schichte 103 bzw. Folie Verwendung findet. Diese Schichte 103 zeichnet sich dadurch aus, dass sie bei entsprechender thermischer Behandlung nach vorgegebenen Temperaturkriterien zwischen einen opaken und einem transparenten Zustand reversibel veränderbar ist. Eine derartige Folie ist beispielsweise aus dem Europäschen Patent EP 0 431 155 B1 bekannt.

Die Vorrichtung 102 weist nunmehr eine Anordnung auf, bei der die Bearbeitung der Schichte 103 modulartig aufgebaut ist und unmittelbar benachbart zur Druckvorrichtung 132 eine Löschvorrichtung 133 angeordnet ist. Die Druckvorrichtung 132 weist einen Schreibkopf 134 und eine gegenüberliegende Andruckrolle 135 auf. Hierbei ist der Schreibkopf 134 fix mit dem Gehäuse 105 des Druckgerätes 101 befestigt, wogegen die Andruckrolle 135 beweglich am Gehäuse 105 gelagert ist. Durch die Andruckrolle 135 wird erreicht, dass beim Einführen des Informationsträgers 104 dieser über die Andruckrolle 135 auf dem Schreibkopf 134 angepresst wird. Die Andruckrolle 135 kann wiederum mit einem Antrieb gekoppelt sein. Selbstverständlich ist es auch möglich, dass aufgrund mehrerer vor und nach der Andruckrolle 135 angeordneten Fördervorrichtungen 106 die Andruckrolle 135 ohne Antrieb mit der Förderbewegung der Fördervorrichtungen 106 mitläuft.

Die Löschvorrichtung 133 ist als beheizbare Rolle 136 ausgeführt. Damit ein exaktes Löschen der thermosensitiven Schichte 103 erfolgen kann, weist diese wiederum eine flexible Oberfläche 137 auf, sodass Unebenheiten ausgeglichen werden können.

Damit nunmehr die thermosensitive Schichte 103 gelöscht werden kann, wird die Schichte 103 auf eine bestimmte Temperatur aufgeheizt. Hierzu ist auf der Rolle 136, die beispielsweise als Keramikrolle ausgebildet sein kann, eine Widerstandspaste 138 bzw. Widerstandsschichte aufgedruckt. Damit die Widerstandspaste 138 mit Energie versorgt werden kann, ist es möglich, dass diese über Kontaktfedern mit einer Energiequelle verbunden ist, sodass durch Beaufschlagen der Widerstandspaste 138 mit Energie sich diese erhitzt und somit durch Übertragung beim Kontakt mit der Schichte 103 ein Erwärmen der Schichte 103 zustandekommt. Damit die elastische Oberfläche 137 geschaffen werden kann, ist über der Widerstandspaste 138 eine Schichte 139, insbesondere aus Silikon, angeordnet. Um einen einwandfreien Löschvorgang der Schichte 103 durchführen zu können, ist auf der gegenüberliegende Seite der Rolle 136 eine Druckrolle 140 angeordnet, wodurch beim Eindringen des Informationsträgers 104 in die Löschvorrichtung 133 die Schichte 103 auf die aufgeheizte Rolle 136 der Löschvorrichtung 133 angepresst wird.

Damit nunmehr ein Löschen der thermosensitiven Schichte 103 durchgeführt werden kann, muss zuerst die Widerstandspaste 138 durch Beaufschlagen mit Energie, insbesondere mit Strom und Spannung, auf eine entsprechende Temperatur aufgeheizt werden, sodass durch anschließendes Hindurchbewegen entsprechend dem Pfeil 121 oder umgekehrt eine Löschung der thermosensitive Schichte 103 durchgeführt werden kann. Der Vorteil der Ausbildung der Löschvorrichtung 133 in Form einer Rolle 136 liegt nun darin, dass durch die flexible Oberfläche 137, welche für die Wärmeübertragung zur thermosensitiven Schichte 103 zuständig ist, Unebenheiten in der thermosensitiven Schichte 103 leicht ausgeglichen werden, d.h., dass damit auch gebogene Plastikkarten, insbesondere Informationsträger 104, vollflächig gelöscht werden können. Ein weiterer Vorteil liegt darin, dass nicht, wie aus dem Stand der Technik bekannt, das Heizelement bzw. die Widerstandspaste 138 über den Informationsträger 104 streift, sondern, dass durch das Rollen der Löschvorrichtung 133 eine wesentlich geringere Verschmutzung der flexiblen Oberfläche 137 sowie eine Beschädigung der Oberfläche der Schichte 103 verhindert wird, wodurch ein wesentlich geringerer Wartungszyklus sowie eine wesentlich höhere Lebensdauer der Löschvorrichtung 133 erzielt wird.

Damit die thermosensitive Schichte 103 von der Druckvorrichtung 132 mit Graphiken bzw. Zeichen beschrieben werden kann, weist der Schreibkopf 134 eine große Anzahl von zueinander thermisch isolierte Thermoelemente 141 auf. Der Druckvorgang erfolgt bei dieser Ausbildung der Vorrichtung 102 in einem Zeilen-Schrittverfahren, bei dem der Informationsträger 104 mittels der Fördervorrichtung 106 bzw. bei Verwendung der Andruckrolle 135 mit einem Antrieb zur Vornahme des Druckvorgangs zeilenweise in bezug auf die Druckvorrichtung 132 positioniert wird.

Die Beaufschlagung der Thermoelemente 141 mit Energie zur Erzielung der entsprechenden für den Druckvorgang erforderlichen Temperatur erfolgt über eine zum Stand der Technik zählende Leistungskontrollschaltung 142, mit der einerseits die Verarbeitungstaktzeiten minimiert und andererseits die empfindlichen Thermoelemente 141 vor Beschädigungen in Folge von Systemfehlem geschützt sind.

Hierzu ist es möglich, dass in der beheizbaren Rolle 136 ein Temperatursensor oder ein Thermoelement zum Überwachen der Temperatur angeordnet ist, wobei der Ausgang des Temperatursensors oder des Thermoelementes mit einer Steuervorrichtung verbunden ist, die die Energiezufuhr zur Widerstandspaste 137 entsprechend der benötigten Temperatur regelt.

Im Anschluss an die einzelnen Bearbeitungsstationen wird der Informationsträger 104 mittels der Fördervorrichtung 106 beispielsweise einem Chipkarteninterface 143 zugeführt, wodurch zusätzliche Informationen vom Informationsträger 104 gelesen werden können. Hierzu ist es möglich, dass der Informationsträger 104 als Magnetkarte bzw. Chipkarte ausgebildet sein kann, sodass zusätzliche Informationen vom Chipkarteninterface 143 gelesen bzw. auf den Informationsträger 104 geschrieben werden können. Selbstverständlich ist es möglich, dass die von dem Informationsträger 104 gelesenen Daten im Klartext auf die thermosensitive Schichte 103 übertragen werden können. Das Chipkarteninterface 143 kann durch jedes beliebige aus dem Stand der Technik bekannte Chipkarteninterface 143 bzw. Kartenlesegerät gebildet werden.

Wie schematisch dargestellt, ist es möglich, dass die Ansteuerung der einzelnen Teile bzw. Bearbeitungsstationen des Druckgerätes 101 über eine Steuervorrichtung 144 erfolgen kann, d.h., dass die Steuerung der Fördervorrichtung 106, der Druckvorrichtung 132 und der Löschvorrichtung 133 über die Steuervorrichtung 144 erfolgt. Weiters ist es möglich, dass die Steuervorrichtung 144 mit einem Rechner 145, beispielsweise einem PC, gekoppelt sein kann.

Bevorzugt wird das Druckgerät 101 von dem Rechner 145 angesteuert, mittels dem die entsprechenden Vorgänge sowohl für die automatische Identifikation des Informationsträgers 104 durch Erfassung von Daten aus einem auf dem Informationsträger 104 angeordneten Datenspeicherelement und dem Verändern bzw. Einbringen neuer Informationen in Klartext bzw. in graphischer Form durchgeführt und überwacht werden. Der Rechner 145 steht dabei mit der im Druckgerät 101 angeordneten Steuervorrichtung 144 in Leitungsverbindung und wird über diesen Rechner 145 der erforderliche Datenaustausch mit dem Druckgerät 101 durchgeführt. Für bestimmte Anwendungszwecke ist es aber auch möglich, das Druckgerät 101 unmittelbar mit einem Bedienungspult auszustatten, um unmittelbar vor Ort entsprechende, die Bearbeitungsvorgänge steuernde, Informationen eingeben zu können.

Bei dem dargestellten Ausführungsbeispiel des Druckgerätes 101 wird der Informationsträger 104 von einem Benutzer in die Einführkulisse 124 der Einsteckvorrichtung 123 eingesteckt, sodass durch die Reinigungsvorrichtung 125 der Informationsträger 104 über die Rollen 127, 128, entsprechend dem Pfeil 121, in den Innenraum des Druckgerätes 101 hineingezogen wird. Hierzu ist es möglich, dass beim Einstecken des Informationsträgers 104 ein Kontakt in der Einsteckvorrichtung 123 geschlossen wird, sodass die Steuervorrichtung 144 erkennen kann, dass ein Informationsträger 104 eingesteckt wird, wodurch die entsprechenden Teile, die zur Beförderung des Informationsträgers benötigt werden, mit Energie beaufschlagt werden können.

Anschließend wird von der Steuervorrichtung 144 die Löschvorrichtung 133 aktiviert, sodass ein Aufheizen der Widerstandspaste 138 auf eine entsprechende Löschtemperatur für die thermosensitive Schichte 103 erfolgt, sodass beim Hinwegbewegen des Informationsträgers 104, insbesondere der Schichte 103, über die Rolle 136 die thermoreversible Schichte 103 gelöscht wird, d.h., dass die auf der thermosensitiven Schichte 103 angeordneten Zeichen bzw. Graphiken gelöscht werden. Bevorzugt wird der Löschvorgang für die thermosensitive Schichte 103 erst nach der Bearbeitung des Chipkarteninterface 143, also beim Herausbewegen des Informationsträgers 104 aus dem Druckgerät 101, durchgeführt, da eine gewisse Zeitdauer zum Erhitzen der Löschvorrichtung 133 notwendig ist. Hierzu ist es auch möglich, dass die Druckvorrichtung 132 beim Aktivieren des Druckgerätes 101 auf eine voreinstellbare Temperatur vorgeheizt wird, sodass ein rascher Schreibzyklus beim Herausbewegen des Informationsträgers 104 erreicht wird. Anschließend wird über die Fördervorrichtung 106 der Informationsträger 104 zum Chipkarteninterface 143 befördert, sodass ein entsprechender Lesevorgang vom Chipkarteninterface 143 durchgeführt werden kann.

Ist der Schreiblesevorgang vom Chipkarteninterface 143 beendet, so wird vom Chipkarteninterface 143 ein Signal an die Steuervorrichtung 144 weitergeleitet, wodurch die Steuervorrichtung nunmehr die Fördervorrichtung 106 bzw. jene Teile, die zum Befördern des Informationsträgers 104 in entgegengesetzter Richtung zum Pfeil 121 notwendig sind, derart angesteuert, dass eine Vorschubbewegung in entgegengesetzter Richtung des Pfeiles 121, also in Richtung der Einfuhrkulisse 124, durchgeführt wird. Gleichzeitig wird von der Steuervorrichtung 144 die Leistungskontrollschaltung 142 des Schreibkopfes 134 angesteuert, sodass die Thermoelemente 141 des Schreibkopfes 134 auf eine entsprechende Schreibtemperatur aufgewärmt werden. Anschließend wird der Informationsträger 104, insbesondere die Schichte 103, über die Löschvorrichtung 133 zum Löschen der Schichte 103 und zum Beschreiben der Schichte 103 über den Schreibkopf 134 hinwegbewegt, sodass über den Schreibkopf 134 durch spezielles Ansteuern der einzelnen Thermoelemente 141 nunmehr die Zeichen bzw. Graphiken auf die thermosensitive Schichte 103 geschrieben werden können. Auf die Steuerung des Schreibkopfes 134 wird nicht explizit eingegangen, da für den Schreibkopf 134 jeder beliebige aus dem Stand der Technik bekannte Schreibkopf 134 eingesetzt werden kann. Anschließend wird der Informationsträger 104 aus der Einführkulisse 124 befördert, sodass der Benutzer nunmehr die Karte, insbesondere den Informationsträger 104, entnehmen kann und der Schreib-Lesevorgang für den Informationsträger 104 abgeschlossen ist.

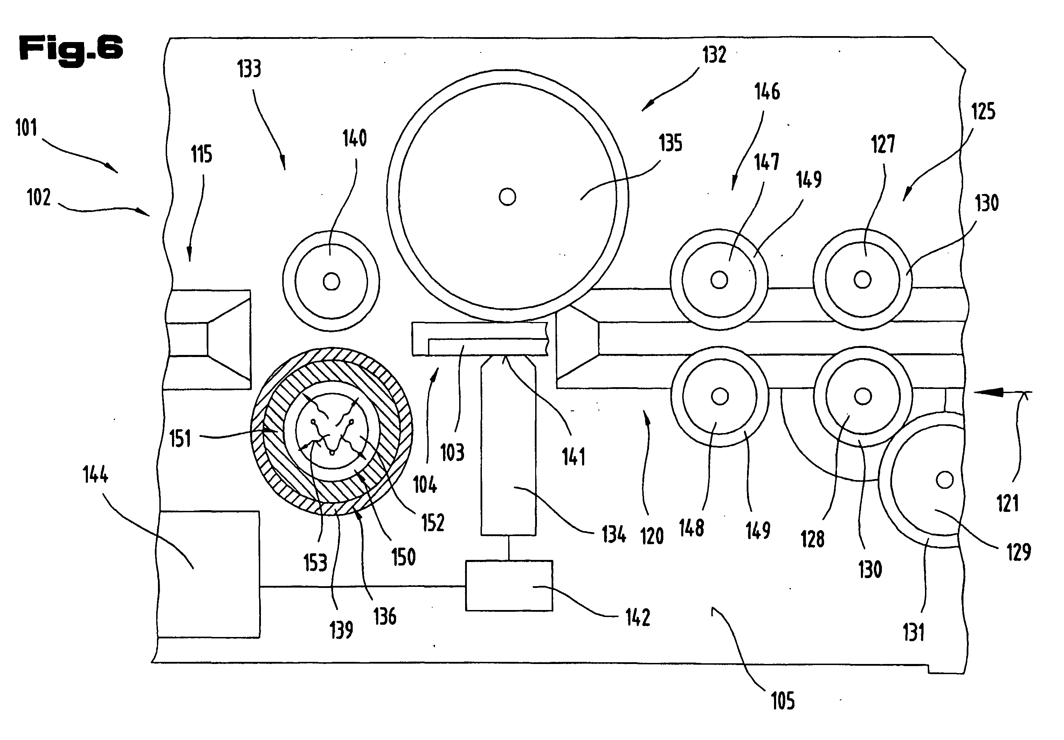

In Fig. 6 ist ein anderes Ausführungsbeispiel des Druckgerätes 101 dargestellt. Bei dem dargestellten Ausführungsbeispiel ist ein Teilausschnitt des Gehäuses 105 mit der darin angeordneten Reinigungsvorrichtung 125, der Druckvorrichtung 132 und der Löschvorrichtung 133, wie in Fig. 5 beschrieben, gezeigt.

Weiters umfasst das Druckgerät 101 zusätzlich eine Kühlvorrichtung 146 in die Förderrichtung - gemäß Pfeil 121 - vor der Druckvorrichtung 132 angeordnet ist. Die Kühlvorrichtung 146 besteht aus zwei Kühlrollen 147, 148, wobei diese wiederum eine flexible Schichte 149 auf ihrer Oberfläche aufweisen, sodass eine Anpassung an Unebenheiten des Informationsträgers 104 möglich ist. Die Kühlvorrichtung 146 hat die Aufgabe, die von der Druckvorrichtung 132 aufgewärmte thermosensitive Schichte 103 nach dem Bedrucken rasch abzukühlen, sodass eine Verbesserung des Kontrastes im Endzustand erreicht wird. Dadurch ist es möglich, dass auch jene thermosensitiven Materialien bzw. Schichten 103 eingesetzt werden können, die zum Erreichen eines bestimmten Endzustandes eine entsprechend rasche Abkühlung benötigen. So wird bei dem Material "Thermo Rewrite" von der Firma Mitsubishi Paper Mils durch das rasche Abkühlen der thermosensitiven Schichte 103 nach dem Druckvorgang der Druckvorrichtung 132 eine extrem kurze Zykluszeit für das Beschreiben des Informationsträ gers 104 erzielt. Ein weiterer Vorteil liegt darin, dass durch das Abkühlen der Schichte 103 ein wesentlich besserer Kontrast im Endzustand des Informationsträgers 104 erzielt wird.

Die Kühlrollen 147, 148 können dabei aus einem Material, das leicht wärmeaufnehmend und gut Wärme leitend ist, ausgebildet sein. Hierzu ist es beispielsweise möglich, dass die Kühlrollen 147, 148 aus Aluminium gebildet werden.

Aus diesem Ausführungsbeispiel ist weiters ersichtlich, dass bei der Löschvorrichtung 133 die Rolle 136 nicht mehr, wie in Fig. 5 beschrieben, mit einer Widerstandspaste 138 aufgeheizt wird, sondern, dass im Inneren der Rolle 136 eine Wärmeenergiequelle 150 angeordnet ist, d.h., dass die Rolle 136 einen Innenraum 151 aufweist, in dem die Wärmeenergiequelle 150 angeordnet ist. Die Wärmeenergiequelle 150 kann beispielsweise aus einer Lampe 152 gebildet sein. Bei einer derartigen Ausbildung ist es nunmehr notwendig, dass das Material der Rolle 136 gut wärmeleitend ist, wie dies beispielsweise bei einem Aluminiumrohr oder Kupferrohr bzw. aus Stahl der Fall ist. Selbstverständlich ist es möglich, dass auf der Außenseite der Rolle 136 die flexible Schichte 139 angeordnet ist, sodass Unebenheiten am Informationsträger 104 ausgeglichen werden können.

Die Funktion der Löschvorrichtung 133 erfolgt nun so, dass durch Beaufschlagung der Lampe 152, insbesondere der Wärmeenergiequelle 150, mit Energie die Lampe 152 zu leuchten beginnt, sodass aufgrund von Lichtstrahlen 153 bzw. durch die hohe Wärmeentwicklung der Lampe 152 ein Wärmestau im Inneren der Rolle 136 entsteht und somit das Material der Rolle 136 aufgewärmt wird, wodurch eine Löschung der thermosensitiven Schichte 103 beim Bewegen des Informationsträgers 104 über die Rolle 136 zustande kommt. Hierzu ist es möglich, dass die Wärmeenergiequelle 150 im Inneren des Rohres 136 stillsteht und sich das Rohr 136 in Bewegungsrichtung des Informationsträgers 104 um die Wärmeenergiequelle 150 bewegt. Es ist auch möglich, dass sich die Wärmeenergiequelle 150 mit der Rolle 136 bewegt, wobei hierzu zur Energieversorgung Schleifkontakte angeordnet sind.

Bei dem dargestellten Druckgerät 101 ist es nun möglich, dass erst beim Herausbewegen des Informationsträgers 104, also in entgegengesetzter Richtung zu der Förderrichtung gemäß Pfeil 121, die Löschvorrichtung 132 die thermosensitive Schichte 103 löscht und anschließend über die Druckvorrichtung 132 die entsprechenden Zeichen bzw. Graphiken auf die Schichte 103 aufgebracht werden. Anschließend wird über die Kühlvorrichtung 146 der Informationsträger 104, insbesondere die thermosensitive Schichte 103, gekühlt, sodass beim Austreten aus dem Druckgerät 101 der Informationsträger 104 bereits so weit abgekühlt ist, dass sich keine Veränderungen mehr an der thermosensitiven Schichte 103 einstellen können.

Abschließend sei der Ordnung halber darauf hingewiesen, dass in den Zeichnungen einzelne Bauteile und Baugruppen zum besseren Verständnis der Erfindung unproportional und maßstäblich verzerrt dargestellt sind.

## Patentansprüche

1. Vorrichtung zum thermischen Einbringen von Informationen, z.B. Zeichen, Graphik etc., in eine thermosensitive Schichte eines mit einem elektronischen Datenspeicherelement in Form eines Prozessor-Chip versehenen Informationsträgers, z.B. Identifikations-, Wert-, Berechtigungs- oder Warenauszeichnungskarte etc., mit einer durch Führungen gebildeten Ein- und Ausgabevorrichtung für den Informationsträger und mit einer Lösch- und einer Druckvorrichtung, welcher zur Energiebeaufschlagung eine Energiekontrollschaltung vorgeordnet ist, wobei die Löschvorrichtung durch eine beheizbare Rolle gebildet ist, **dadurch gekennzeichnet, dass** die Rolle (136) eine flexible Oberfläche (137) aufweist und die Verarbeitung und Übergabe der zu druckenden Informationen des elektronischen Datenspeicherelementes (31) an die Druckvorrichtung (22, 132) über einen Prozessor (61) erfolgt.

2. Vorrichtung nach Anspruch 1, **dadurch gekennzeichnet, dass** die Löschvorrichtung (133) in einem benachbarten Bereich der Druckvorrichtung (132) angeordnet ist.

3. Vorrichtung nach Anspruch 1 oder 2, **dadurch gekennzeichnet, dass** auf der Rolle (136) eine Widerstandspaste (138) oder eine Widerstandsschichte aufgetragen bzw. aufgedruckt ist.

4. Vorrichtung nach einem oder mehreren der vorhergehenden Ansprüche, **dadurch gekennzeichnet, dass** die beheizbare Rolle (136) beispielsweise aus einer Keramikrolle gebildet ist, auf der die Widerstandspaste (138) oder die Widerstandsschichte angeordnet ist.

5. Vorrichtung nach einem oder mehreren der vorhergehenden Ansprüche, **dadurch gekennzeichnet, dass** die flexible Oberfläche (137) durch eine elastische Schichte (139), beispielsweise aus Silikon, besteht.

6. Vorrichtung nach Anspruch 5, **dadurch gekennzeichnet, dass** die flexible Schichte (139) bevorzugt auf der Widerstandspaste (138) oder der Widerstandsschichte angeordnet ist.

7. Vorrichtung nach einem oder mehreren der Ansprüche 3 bis 6, **dadurch gekennzeichnet, dass** die Widerstandspaste (138) oder die Widerstandsschichte über Federkontakte mit einer Energiequelle verbunden ist.

8. Vorrichtung nach einem oder mehreren der vorhergehenden Ansprüche, **dadurch gekennzeichnet, dass** in der beheizbaren Rolle (136) ein Temperatursensor oder ein Thermoelement angeordnet ist, wobei der Ausgang des Temperatursensors oder des Thermoelements mit einer Steuervorrichtung (144) verbunden ist.

9. Vorrichtung nach einem oder mehreren der vorhergehenden Ansprüche, **dadurch gekennzeichnet, dass** an der gegenüberliegenden Seite der beheizbaren Rolle (136) eine Druckrolle (140) angeordnet ist.

10. Vorrichtung nach einem oder mehreren der vorhergehenden Ansprüche, **dadurch gekennzeichnet, dass** die beheizbare Rolle (136) einen Innenraum (151) aufweist, in dem eine Wärmeenergiequelle (150) zum Heizen der Rolle (136) angeordnet ist.

11. Vorrichtung nach Anspruch 10, **dadurch gekennzeichnet, dass** die Wärmeenergiequelle (150) beispielsweise aus einer Lampe (152) gebildet ist.

## Claims

1. Device for thermally applying information, e.g. characters, graphics, etc., to a heat-sensitive layer of a data carrier provided with an electronic data memory element in the form of a processor chip, e.g. identification card, points card, authorisation card or product label card, etc., with an input and output device formed by guides for the data carrier, and having an eraser device and a printer device which is supplied with power by a power control switch connected upstream, the eraser device being provided in the form of a heatable roller, **characterised in that** the roller (136) has a flexible surface (137) and the information of the data memory element (31) to be printed is processed and transmitted to the printer device (22, 132) via a processor (61).

2. Device as claimed in claim 1, **characterised in that** the eraser device (133) is disposed in a region adjacent to the printer device (132).

3. Device as claimed in claim 1 or 2, **characterised in that** a resistive paste (138) or a resistive coating is applied to or printed on the roller (136).

4. Device as claimed in one or more of the preceding claims, **characterised in that** the heatable roller (136) is a ceramic roller, on which the resistive paste (138) or the resistive coating is disposed.

5. Device as claimed in one or more of the preceding claims, **characterised in that** the flexible surface (137) is an elastic layer (139), for example made from silicone.

6. Device as claimed in claim 5, **characterised in that** the flexible layer (139) is preferably disposed on the resistive paste (138) or the resistive coating.

7. Device as claimed in one or more of claims 3 to 6, **characterised in that** the resistive paste (138) or the resistive coating is connected to a power source by means of spring contacts.

8. Device as claimed in one or more of the preceding claims, **characterised in that** a temperature sensor or a thermoelement is disposed in the heatable roller (136) and the output of the temperature sensor or thermoelement is connected to a control device (144).

9. Device as claimed in one or more of the preceding claims, **characterised in that** a print roller (140) is disposed at the side lying opposite the heatable roller (136).

10. Device as claimed in one or more of the preceding claims, **characterised in that** the heatable roller (136) has an internal compartment (151) in which a heat energy source (150) for heating the roller (136) is disposed.

11. Device as claimed in claim 10, **characterised in that** the heat energy source (150) is a lamp (152), for example.

## Revendications

1. Dispositif pour l'application thermique d'informations, par exemple de signes, d'un graphique etc., dans une couche thermosensible d'un support d'informations muni d'un élément électronique de stockage de données sous la forme d'une puce de processeur, par exemple une carte d'identification, une carte de paiement, une carte d'autorisation ou de distinction de produit, avec un dispositif d'entrée et de sortie formé par des guidages pour le support d'information et avec un dispositif de suppression et d'impression en amont duquel est disposé un montage de commande d'énergie en vue de l'alimentation en énergie, où le dispositif de suppression est formé par un rouleau chauffant, **caractérisé en ce que** le rouleau (136) présente une surface flexible (137), et que le traitement et la transmission des informations à imprimer de l'élément électronique de stockage de données (31) au dispositif d'impression (22,132) a lieu par un processeur (61).

2. Dispositif selon la revendication 1, **caractérisé en ce que** le dispositif de suppression (133) est disposé dans une zone avoisinante du dispositif d'impression (132).

3. Dispositif selon la revendication 1 ou 2, **caractérisé en ce qu'**il est appliqué ou imprimé sur le rouleau (136) une pâte de résistance (138) ou une couche de résistance.

4. Dispositif selon l'une ou plusieurs des revendications précédentes, **caractérisé en ce que** le rouleau (136) apte à être chauffé est formé par exemple par un rouleau céramique sur lequel est disposé la pâte de résistance (138) ou la couche de résistance.

5. Dispositif selon l'une ou plusieurs des revendications précédentes, **caractérisé en ce que** la surface flexible (137) est constituée d'une couche élastique (139), par exemple en silicone.

6. Dispositif selon la revendication 5, **caractérisé en ce que** la couche flexible (139) est disposée de préférence sur la pâte de résistance (138) ou la couche de résistance.

7. Dispositif selon l'une ou plusieurs des revendications 3 à 6, **caractérisé en ce que** la pâte de résistance (138) ou la couche de résistance est reliée par des contacts à ressort à une source d'énergie.

8. Dispositif selon l'une ou plusieurs des revendications précédentes, **caractérisé en ce qu'**il est disposé dans le rouleau chauffant (136) un capteur de température ou un élément thermique, où la sortie du capteur de température ou de l'élément thermique est reliée à un dispositif de commande (144).

9. Dispositif selon l'une ou plusieurs des revendications précédentes, **caractérisé en ce qu'**il est disposé au côté opposé du rouleau chauffant (136) un rouleau de pression (140).

10. Dispositif selon l'une ou plusieurs des revendications précédentes, **caractérisé en ce que** le rouleau chauffant (136) présente un espace intérieur (151) dans lequel est disposé une source d'énergie thermique (150) pour chauffer le rouleau (136).

11. Dispositif selon la revendication 10, **caractérisé en ce que** la source d'énergie thermique (150) est formée par exemple par une lampe (152).
